# EUROPEAN PATENT APPLICATION

(11) **EP 1 134 707 A1**
(43) Date of publication of application: **19.09.2001**
(21) Application number: 00302183.9
(22) Date of filing: 17.03.2000
(51) Int. Cl.: G07F 7/10

(54) **Payment authorisation method and apparatus**

(71) Applicant: Tradesafely.com Limited, Endon, Staffordshire ST9 9BQ (GB)
(72) Inventor: Hawkes ESQ., Michael, Manchester M1 6NG (GB)
(74) Representative: Lloyd, Patrick Alexander Desmond

(57) **Abstract**

When a customer (112) sends an order including credit or debit card payment details, from their Internet browser to a merchant (110) web site, the merchant seeks authorisation from the credit or debit card issuer (114). The credit card issuer sends an e-mail to the holder of the credit or debit card account holder requesting verification of the order. The account holder can accept or reject the order or, if the order has not been placed by them, indicate that it is fraudulent. Unless the credit card issuer receives acceptance of the order from the account holder, it will not authorise the transaction. If the order is accepted by the account holder, it will authorise the transaction subject to its normal authorisation checks. The e-mails sent between the account holder and card issuer contain a unique transaction reference unknown to the merchant. An intermediate dispatch house may handle e-mail communication with account holders and communicate with the card issuer.

## Description

This invention relates to security systems for on-line and off-line transactions. It is particularly suited to credit and debit transactions over the Internet or other on-line communications systems but is also suitable for off-line transactions.

It is common practice to pay for goods or services ordered over the Internet by sending credit or debit card details to the merchant from whom the goods or services are ordered. Typically, the customer accesses the merchant's web site via their Internet browser, selects the goods or services and enters their credit or debit card details and delivery address. The goods or services selection and the card details and delivery address are then sent to the merchant who will then despatch the goods or services once they have authenticated the card with the card issuer.

Typically, on-line credit card transactions are over secure lines. In practice, this means that all transmitted data is encrypted. There are several widely used encryption standards including the RSA, PKI and PGP algorithms.

Disclosing credit card details over the Internet is widely perceived as dangerous due to the uncertainties it involves. Building a successful on-line trading business will be difficult until customers have piece of mind about disclosing credit card details.

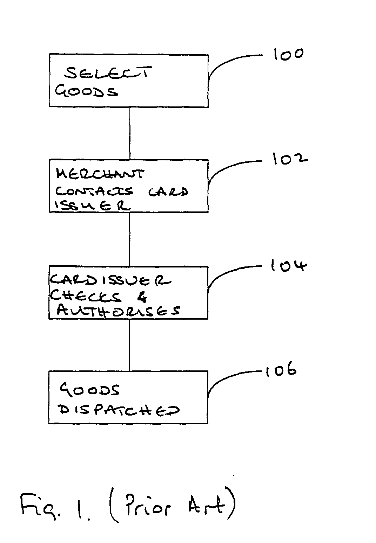

Figure 1 shows how a typical on-line transaction progresses. At step 100 the customer accesses the merchant's web site and selects goods and services via their own Internet browser. The customer's credit card details and delivery addresses are entered together with a selection, into a template displayed on the browser. These details are then sent, in encrypted form, to the merchant. At step 102 the merchant receives the order together with the payment details and contacts the card issuer to obtain authorisation for the payment. At step 104 the card issuer checks a local card database and, if appropriate, organises the transfer of funds. The checks made will include a check to see whether the card is registered as stolen or lost or whether the user has exceeded their credit limit. At step 106, the merchant will dispatch the goods or services if payment is authorised.

The method described is a very insecure model for the overall transaction as credit card information can be invented or stolen from existing payment counterfoils resulting in a valid account being debited without the card owners permission.

The traditional model suffers from a number of further problems. First, a customer is often not aware of the total cost to him in his own currency when he purchases an item. Until he receives his credit card statement he will not know the full cost. This problem arises as many goods and services are purchased cross-border and the prices advertised on the web site are given in a currency other than the purchaser's local currency. The purchaser does not know the currency conversion rate that will be applied by his credit card company and so cannot know the actual total cost of the transaction.

Secondly, and most importantly for the piece of mind of the customer, the credit card number disclosed to the merchant may be abused resulting in multiple erroneous transactions. This abuse might be by network hackers which is partially ameliorated by use of encryption algorithms, or by rogue traders who have access to decrypted credit card details and then may exploit those details.

Furthermore, merchants and credit card companies also require to be protected from the problem of card owners making claims that the card number was not provided to the merchant and seeking compensation. This can arise from fraudulent use of the credit card by its owner or following theft of a card or card details.

The present invention aims to overcome the problems set out above and to provide an improved method and apparatus for on-line transactions.

According to the invention there is provided a method of authorising purchases on-line, comprising the steps of; on receipt by a merchant of an on-line order from a customer, the order including payment details to pay for the order form on account, requesting authorisation for the order from a third party honouring the payment; on receipt by the third party of the authorisation request, sending an electronic communication by the third party to the account holder requesting verification of the transaction; on receipt by the account holder of the verification request, replying to the third party indicating whether or not the transaction is accepted; on receipt by the third party of the reply from the account holder, responding to the authorisation request from the merchant, the response being at least partially based on the response from the account holder; and on receipt of the response to the authorisation request from the third party, fulfilling or declining the order depending upon whether the transaction is authorised.

The invention further provides a method of authenticating credit or debit transactions made on-line, wherein goods or services are ordered from a customer browser and the order sent with credit or debit payment instructions to a merchant web site, the method comprising the party honouring the credit or debit payment performing the steps of: receiving an authorisation request from the merchant to authorise the transaction between the customer and the merchant; seeking verification from the account holder of the transaction request; and refusing authorisation of the transaction if the transaction is not verified by the account holder.

The invention further provides a method of authorising payment for goods or services ordered on-line from a merchant by a customer in which the merchant seeks authorisation for a credit or debit card payment from the card issuer; the method comprising the card issuer requesting verification of the order from the account holder prior to authorisation of the transaction.

The invention further provides a system for authorising payment for goods or services ordered on-line from a merchant by a customer, having means for the merchant to seek authorisation for a credit or debit payment from the third party honouring the debit or credit, the system comprising means at the third party for requesting verification from the holder of the credit or debit account of an order for which authorisation has been sought prior to determining authorisation of the transaction.

The invention further provides apparatus for authentication of credit or debit transactions made on-line, wherein goods or services are ordered from a customer browser and the order sent with details of payment from a credit or debit account to a merchant web site comprising, at the site of the party honouring the credit or debit payment: means for authorising a transaction between customer and merchant notified by the merchant; and means for seeking from the account holder, prior to determining authorisation, verification of the transaction request.

The invention further provides an on-line system for purchase of goods or services by a customer from a merchant comprising: at the merchant: means for receiving an order from a customer including payment details from a debit or credit account; means for requesting authorisation to fulfil the order from a third party honouring the debit or credit payment; at the third party: means for sending an electronic communication to the account holder on receipt on an authorisation request from the merchant, the electronic communication requesting verification of the debit or credit transaction; means for receiving a reply to the electronic communication from the account holder; means for refusing authorisation of the transaction if the reply received from the account holder does not accept the transaction; and at the account holder: means for receiving the electronic communication from the third party; and means for sending an electronic response to the communication to the third party.

Embodiments of the invention have the advantage that a credit or debit card cannot be used to secure an on-line purchase without the knowledge of the cardholder. Preferably, the communication from the card issuer is sent to a pre-registered address, preferably an e-mail address for the account holder. If the account holder receiving such an e-mail has not initiated the transaction, the transaction cannot proceed and the card issuer will become aware of a fraud.

Preferably the communications between the card issuer and the account holder include a unique transaction reference number. This reference number is not known to the merchant in the transaction and has the advantage of preventing the merchant from authorising the transaction itself.

Preferably, the electronic communication to the account holder includes the amount of the transaction in the account holders local currency. This has the advantage that the account holder knows the exact amount he will have to pay for the transaction before accepting or declining the transaction.

As each transaction is verified by the card holder via their pre-registered e-mail address, embodiments of the invention have the advantage that bogus claims by the card holder that they did not visit the merchant web site in question or order the goods can be repudiated.

Preferably, the unique transaction reference numbers are activated after they have been used to identify a transaction and are deactivated if a response to an electronic communication to an account holder is not received within a given time. The reference numbers are otherwise deactivated as soon as a response is received.

Preferably, an e-mail sent to the account holder from the card issuer includes embedded hyper links. This has the advantage that the customer may reply with a single click of the mouse or other input device.

Preferably, the response options available to the account holder to an e-mail from the card issuer include acceptance or rejection of the transaction and an indication that the transaction may be fraudulent.

The invention also provides a method of authenticating transactions made on-line in which a pre-registered party has credit with an on-line merchant and goods or services are ordered from a customer browser and the order sent on-line to the merchant, and wherein the cost of the order is to be debited from the pre-registered party's credit with the merchant, the method comprising the steps of: the merchant sending an electronic verification request to a pre-registered electronic communication address for the pre-registered party; and the merchant refusing to complete the transaction if the transaction is not verified by the pre-registered party.

This aspect of the invention has the advantage that the same degree of security can be ensured when there is no third party such as a credit card issuer. In systems where a party purchases credit in advance from a web-site, the web-site owner can be sure that a request to draw down that credit has been received from a legitimate pre-registered credit holder by sending an electronic communication to the pre-registered credit holder requesting authorisation for the transaction.

According to a further aspect of the invention, there is provided a system for authorising payment for goods or services ordered by a customer from a merchant in which the customer intends to pay for the goods or services by a credit or debit payment, the method comprising the steps of: sending an electronic verification request to the party to whom the means of credit or debit payment is registered, the verification request requesting verification of the payment from the pre-registered owner of the payment means; and refusing the transaction unless the pre-registered owner of the payment means accepts the transaction.

This aspect of the invention has the advantage that the degree of security brought to an on-line credit or debit transaction may also be achieved in off-line transactions.

Preferably, the verification request is sent as an e-mail and preferably to an Internet enabled mobile telecommunications device such as a mobile phone. This has the advantage that the verification request can be received by the customer at the point of purchase.

Embodiments of the invention will now be described, by way of example, and with reference to the accompanying drawings, in which:
Figure 1, referred to previously, is a flow chart outlining the major steps in the prior art on-line transaction method;
Figure 2 is a schematic block diagram illustrating a first embodiment of the invention;
Figure 3 is a flow chart outlining the major steps in the first embodiment of the present invention;
Figure 4 is a schematic block diagram outlining a second embodiment of the invention;
Figure 5 is a flow diagram outlining the major steps in the second embodiment of the invention;
Figure 6 is a schematic block diagram outlining a third embodiment of the invention; and
Figure 7 is a flow diagram outlining the major steps in the third embodiment of the invention.

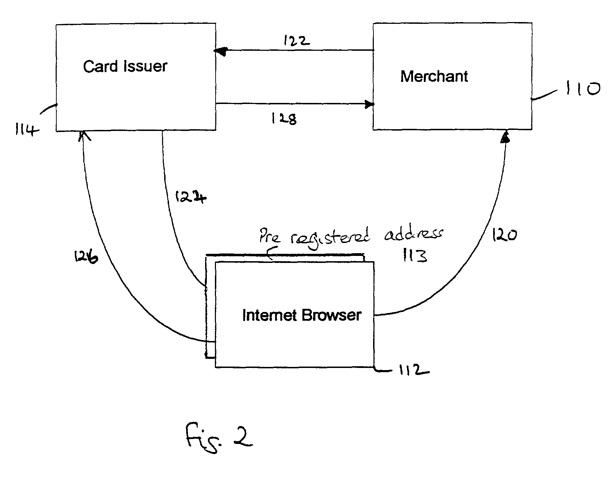

Referring to figure 2, the essence of the invention resides in the card issuer, or a proxy on behalf of the card issuer, verifying the transaction with the card or credit holder before authorising the funds transfer. The card or credit holder has the opportunity to accept or reject the transaction. Preferably, the card or credit holder also has the opportunity to indicate to the card issuer that the transaction requested may be fraudulent. In cases of legitimate purchase the card holder/credit holder and the customer will be in the same person.

Thus, in figure 2 a computer communications network is illustrated in which the merchant computer is represented by the reference numeral 110, the customer by reference 112, the electronic communication address of the card holder by 113, and the credit card issuer as reference 114. In practice the merchant and the card issuer will be web sites on the Internet supported by standard arrangements of Internet Service Providers (ISP's) and servers. The customer can access the merchant site through their Internet browser and ISP.

The customer 112 accesses the merchant 110 and selects from the merchant's web site displayed on his Internet browser, goods or services to be purchased. He enters his details, for example by selecting from a menu displayed within his browser, and then enters his credit card details and delivery address together with any other information required by the merchant. He then sends the order and payment details to the merchants's web site. Typically, this information is sent over a secure line, encrypted by one of the standard prior art techniques referred to earlier.

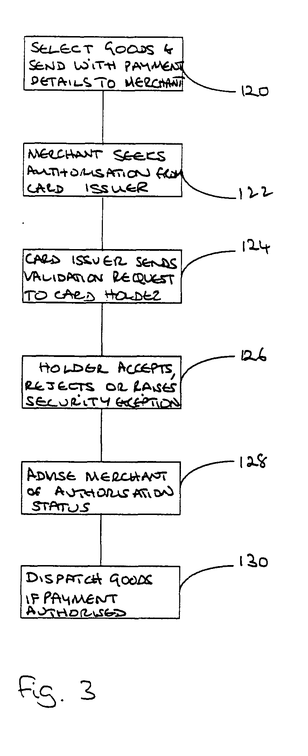

In figure 3, this step is shown at 120. The merchant then contacts the card issuers's web site seeking authorisation from the credit card issuer. This step will usually take place over an Internet connection but could be through a secure virtual private network. The merchant will identify themselves to the card issuer by a merchant reference number. This step is represented at 122 in figure 3. These two steps correspond to steps 100 and 102 in the prior art method of figure 1.

The card issuer 114 then contacts the card holder who should be the would-be purchaser. In the preferred embodiment, the card issuer sends an electronic message to the card holder at their pre-registered address requesting validation of the request. This electronic message is preferably an e-mail. This pre-registered address is given to the card issuer by the card holder when the card holder is first issued with the credit card by the card issuer. Thus, the message is sent not necessarily to the customer's IP address but to the e-mail address for the registered card holder. When the card is being used correctly these two addresses may be the same depending on how the card holder has set up their electronic communications.

The validation request sent to the card holder is also accompanied by a unique transaction reference assigned by the card issuer. This transaction reference is not known by the merchant. The validation request will include the name and address of the merchant as well as the order amount.

Although it is preferred that the validation request is sent by the card issuer to the card holder by e-mail, the request could be sent by other methods, including a telephone call from the card issuer to a pre-registered card holder telephone number. The step of issuing the validation request is shown at step 124 in figure 3.

The e-mail received at the card holder will ask the card holder to respond with one of three options: to accept the payment request, reject the payment request or to raise a security exception for this transaction. The latter will occur when a third party is attempting to use the credit card fraudulently and the credit card owner, who receives the e-mail, is unaware of the purchase request. The reply from the card holder will include a unique transaction reference. This step is shown at 126 in figure 3.

The card issuer receives the authorisation status from the card holder, preferably in the form of a return e-mail, for the transaction and then, at step 128, authorises payment to the merchant, or refuses that payment depending on the response from the cardholder and the result of the card issuer's own checks. It should be noted that the card issuer will still perform the same checks as in the prior art system to ensure that the card issuer has sufficient credit and that the card has not been suspended, for example due to theft or due to non-payment by the card holder. The authorisation message sent from the card issuer to the merchant is shown step 128. At step 130 the merchant, if it receives a positive authorisation, despatches the goods or services to the customer. Thus it will be seen that authorisation is refused if the reply from the card holder does not indicate acceptance of the transaction.

Thus, the apparatus and method embodying the invention ensure that the on-line card holder authorises each payment prior to the funds being released. This ensures that authorisation can only come from the Internet address of the card holder. Thus, it prevents on-line abuse of stolen credit cards. The only situation in which the system could not avoid a fraudulent transaction would be if a manufacter obtained the credit card holders credit card details, obtained access to the computer registered as their e-mail address and also obtained any passwords which protected access to that computer.

Possible fraud by the merchant is avoided as the merchant cannot see the card issuer's transaction reference number and is so unable to authorise payment on behalf of the customer. Further security is provided in that all communications between the parties are across secure links using encryption algorithms as described with respect to the prior art.

The transaction reference number is preferably a unique number only issued once and deactivated on receipt of a reply from the card holder to an e-mail containing the reference number. If no reply is received, the transaction reference number will be deactivated after a predetermined period of, for example, a few hours or a few days. This prevents malevolent third parties obtaining previous transaction details and re-using previous transaction reference numbers.

In the preferred embodiment of the invention, the e-mail sent to the on-line card holder from the card issuer uses embedded hyperlinks, using HTML or a similar language, to make confirmation a "single-click" operation. Thus, the card holder only has to click his mouse on "yes", "no" or "fraud" areas of the e-mail received and the return e-mail will be generated and sent back to the card issuer's URL..

As the e-mail is sent to the card holder by the card issuer, the card issuer is able to apply the appropriate currency conversation rate, if the card holder will be billed in a currency other than that in which the transaction is conducted. Thus, the verification request presented to the customer is for the exact amount the card holder will be billed.

It will be seen that the method and apparatus described is advantageous in eliminating misuse of a customer's credit card by third parties. It also avoids attempts by card holders to claim that they never requested the goods or services or even visited the web site in question. As the card holders themselves authorise the payment, any such claims will have no foundation except in extreme cases such as where a criminal has stolen the customer's credit card and gained access to his computer and any passwords protecting it.

Communication between the card issuer and the card holder may be through a standard e-mail subsystem. Alternatively, if near instantaneous electronic confirmation is required, on-line web based mail systems may be used. Such systems will typically reply within a few seconds. Sometimes as quickly as two or three seconds.

The invention has been described purely with reference to credit cards. It will be appreciated that it is applicable to any on-line payment method including, but not limited to, debit cards, store cards, direct debits from bank or other accounts etc. The term "card holder" should be interpreted accordingly and can include virtual credit cards where no actual physical card exists. The term "account holder" used herein is intended to cover the holder of any source of credit or debit funds which may be used to pay for a transaction.

To increase security further, card issuers may issue on-line only credit/debit cards. Such cards will only be valid for on-line transactions so preventing off-line fraud such as fraudulent telephone purchases or use for low cost items where authorisation may not be required.

The system described allows card fraud to be detected very quickly as the card issuer is aware of a potential fraud as soon as they receive the indication of a security exception from the card holder. Usually, a card holder is not aware that a third party has attempted to use their card until long after the attempt has been made. Often, several purchases will have been made with the stolen card or bogus card before the theft is recognised. This can be distressing to the card holder and costly to the card issuer who is obliged to honour the payments.

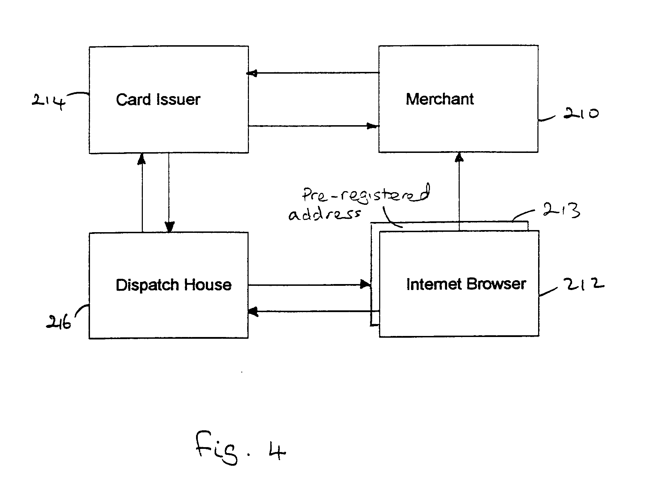

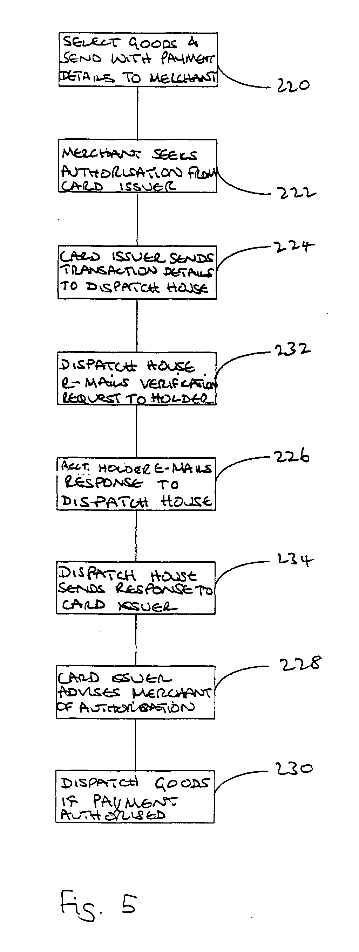

Figures 4 and 5 illustrate a second embodiment of the invention. This is identical to the first embodiment except that communications with the card holder are handled on behalf of the card issuer by a proxy such as a trusted dispatch house 216. The despatch house will hold a database of card holders, their card numbers and their pre-registered e-mail addresses. When the card issuer receives an authorisation request from a merchant, they will pass on the card details to the dispatch house which will then handle communication with the card holder. On receipt of the return e-mail from the card holder, they will pass on the response to the card issuer. The steps in the process are otherwise identical to the embodiment of figures 2 and 3. In figure 5, the steps shown are the same as figure 3 except that in step 224 the card issuer sends the validation request to the despatch house who passes it on to the customer at step 232. At step 226 the card holder sends their response to the dispatch house and at step 234 the dispatch house passes on that response to the card issuer. In figure 4, the merchant is identified by reference 210, the card issuer by 214, the customer browser by 212 and the account holder pre-registered electronic communication address by 213.

This alternative has the commercial advantage that the card issuer can contract out communications with customers to a trusted third party. It has the further advantage that its own confidential details regarding customer credit limits and other information on which authorisation requests are decided, are kept a further step removed from customers and potential hackers.

Although in this embodiment, communications between the despatch house and the customer will be by e-mail, communications between the card issuer and the despatch house will be, as the communication between customer and merchant, merchant and card issuer, over a secure connection.

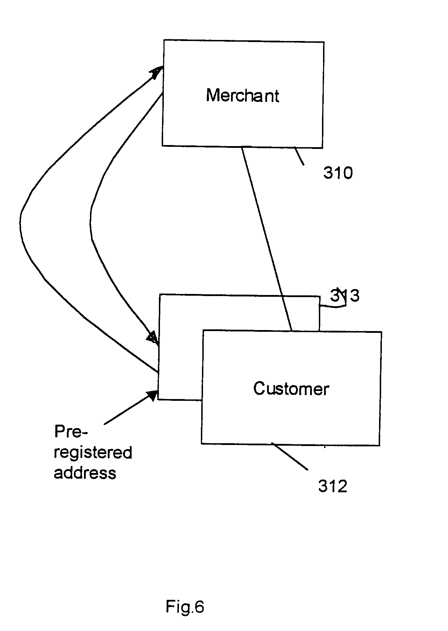

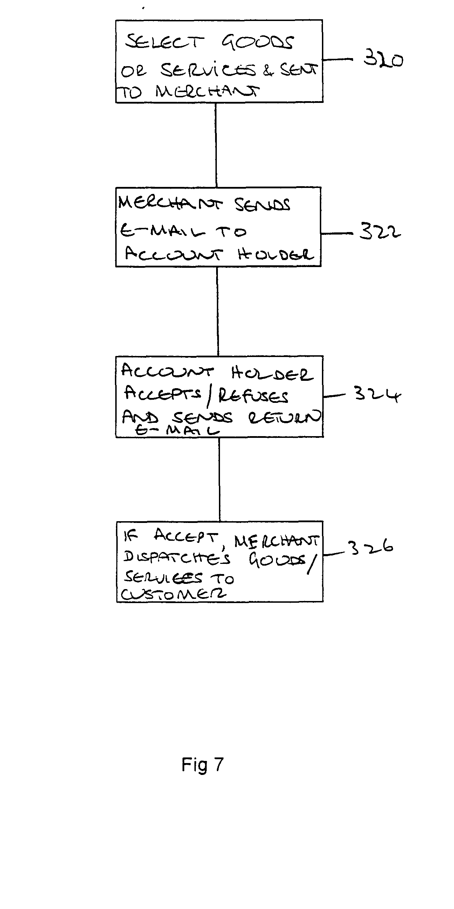

In the third embodiment of the invention illustrated in figures 6 and 7, the principal of the invention is applied in a situation where there is no third party payment authoriser. In some Internet commerce sites, a subscriber purchases on-line credit from the web site. This credit is then used up as the subscriber makes purchases from the web site.

Some of the same problems identified with respect to credit card transaction occur with this type of system. If an unauthorised third party can gain access to the web site in the name of a subscriber, they can draw down the subscribers credit without the knowledge of the subscriber. In the embodiment of figure 6, the customer is shown at 312 and the merchant at 310. The two are connected across the Internet by a standard communication. In this embodiment, when the customer subscribes to the merchant's on-line service, as well as purchasing credit, which operation itself can be authorised and verified using the embodiments of figures 2 to 5, the subscribing customer also provides an electronic communications address such as an e-mail address. When the customer in the future makes purchases from the merchant's web site using the credit they have with that web site, the merchant will seek verification of the purchase request by sending an electronic communication such as an e-mail to the pre-registered address 313, of the subscriber. As in the previous embodiments, this verification request will include a unique transaction reference number and will ask the subscriber, who is an account holder, to accept or refuse the transaction or raise a security exception. In this respect, the content of the message, and the reply from the subscriber are the same as in previous embodiments.

The process described is illustrated at figure 7. At step 320 the customer selects goods from the merchant web site and sends the selection together with payment details to the merchant. In this case, the payment details comprise some identification of the users account with the merchant.

The merchant at step 322 will compare the amount of the transaction requested. If it is outside the subscribers available credit, the transaction will be refused and the customer will be sent a return message to their Internet browser to that effect. If the amount requested is within the available credit the merchant will sent an electronic communication such as an e-mail to the pre-registered e-mail address for the subscriber. At step 324 the subscriber replies to the e-mail and, if the reply comprises an acceptance, the goods or services are despatched to the customer/subscriber at step 326.

The manner in which the electronic communication is received in each of the embodiments described is not important. For example, the pre-registered address for electronic communications could be an Internet enabled mobile phone. This would allow a customer to make on-line purchases either from their mobile phone or from an Internet browser on a PC attached to the Internet. Similarly, the purchase as between the customer and the merchant need not necessarily be on-line. In a conventional transaction environment, for example in a shop, the credit or debit card issuing authority could e-mail the purchasers Internet enabled mobile phone with the verification request. This would ensure the same degree of security to off-line purchases as is given to on-line purchases in the embodiments described.

Thus, the embodiments described provide a method and system which can greatly increase the security of payment transaction over the Internet or other on-line systems.

Many modifications are possible to the embodiments described without departing from the spirit and scope of the invention which is defined solely by the claims appended hereto.

## Claims

1. A method of authorising purchases on-line, comprising the steps of;
on receipt by a merchant of an on-line order from a customer, the order including payment details to pay for the order from an on account, requesting authorisation for the order from a third party honouring the payment;
on receipt by the third party of the authorisation request, sending an electronic communication by the third party to the account holder requesting verification of the transaction;
on receipt by the account holder of the verification request, replying to the third party indicating whether or not the transaction is accepted;
on receipt by the third party of the reply from the account holder, responding to the authorisation request from the merchant, the response being at least partially based on the response from the account holder; and
on receipt of the response to the authorisation request from the third party, fulfilling or declining the order depending upon whether the transaction is authorised.

2. A method according to claim 1, wherein the authorisation request sent by the merchant to the third party honouring payment includes a merchant reference.

3. A method according to claim 1 or 2, wherein the electronic communication by the third party to the account holder includes a unique transaction reference.

4. A method according to claim 3, wherein the reply from the account holder to the third party includes the unique transaction reference.

5. A method according to any preceding claim, wherein the electronic communication from the third party to the account holder identifies the cost to the customer of the requested transaction in the account holder's local currency.

6. A method according to any of claims 1 to 5, wherein the third party holds a database of pre-registered account holder electronic communications addresses.

7. A method according to any of claims 1 to 5, wherein the electronic communication from the third party to the account holder is sent from an intermediate party to whom the third party has sent details of the transaction to be verified.

8. A method according to claim 7, wherein the intermediate party holds a database of pre-registered account holder electronic communications addresses.

9. A method according to any preceding claim, wherein the electronic communication to the account holder is an e-mail.

10. A method according to any preceding claim, wherein the response from the account holder to the electronic communications is sent as an e-mail.

11. A method according to any preceding claim wherein the reply from the account holder to the third party indicates whether or not the transaction is refused, accepted or fraudulent.

12. A method according to any preceding claim, wherein the payment details include a credit or debit card number and the third party honouring the transaction is the card issuer.

13. A method of authenticating credit or debit transactions made on-line, wherein goods or services are ordered from a customer browser and the order sent with credit or debit payment instructions for payment from an account to a merchant web site, the method comprising the party honouring the credit or debit payment performing the steps of:
receiving an authorisation request from the merchant to authorise the transaction between the customer and the merchant;
seeking verification from the account holder of the transaction request; and
refusing authorisation of the transaction if the transaction is not verified by the account holder.

14. A method of authorising payment for goods or services ordered on-line from a merchant by a customer in which the merchant seeks authorisation for a credit or debit card payment from the card issuer; the method comprising the card issuer requesting verification of the order from the credit or debit card account holder prior to authorisation of the transaction.

15. A method according to claim 14, wherein the verification request is sent by e-mail.

16. A method according to claim 14 or 15, wherein a response by the account holder to the verification request is sent by e-mail.

17. A method according to claim 14, 15 or 16, wherein verification from the account holder is sought through an intermediate party.

18. A method according to any of claims 14 to 17, wherein the verification request includes a unique transaction reference number.

19. A method according to claims 16 and 18, wherein the account holder response to the verification request includes the unique transaction reference number.

20. A system for authorising payment for goods or services ordered on-line from a merchant by a customer, having means for the merchant to seek authorisation for a credit or debit payment from the third party honouring the debit or credit, the system comprising means at the third party for requesting verification from the holder of the credit or debit account of an order for which authorisation has been sought prior to determining authorisation of the transaction.

21. A system according to claim 20 wherein the means for requesting verification includes means for sending an electronic communication to the account holder.

22. A system according to claim 21, wherein the means for sending an electronic communication to the account holder comprises means for e-mailing the account holder.

23. A system according to claim 21 or 22, wherein the means for requesting verification of the order comprises a store of account holder electronic communication addresses.

24. A system according to claim 23, wherein the means for requesting verification includes an intermediate party in electronic communication with the third party wherein the store of account holder electronic communication addresses is stored at the intermediate party.

25. A system according to any of claims 20 to 24, wherein the means for requesting verification of an order includes means for assigning a unique transaction reference to the request.

26. Apparatus for authentication of credit or debit transactions made on-line, wherein goods or services are ordered from a customer browser and the order sent with details of payment from a credit or debit account to a merchant web site comprising, at the site of the party honouring the credit or debit payment:
means for authorising a transaction between customer and merchant notified by the merchant; and
means for seeking from the account holder, prior to determining authorisation, verification of the transaction request.

27. Authentication apparatus according to claim 26, wherein the means for seeking verification include means for sending an e-mail to the account holder containing a unique transaction reference, and means for receiving an e-mail response from the account holder indicating whether or not the transaction is accepted.

28. Authentication apparatus according to claim 27, comprising an intermediate party between the party honouring the payment and the account holder, the intermediate party having a store of pre-registered account holder e-mail addresses and means for sending an e-mail seeking verification to the pre-registered e-mail address of the account holder party to the transaction with the merchant.

29. Authentication apparatus according to claim 27 wherein the party authorising payment further includes a store of pre-registered customer e-mail addresses, and the means for seeking verification comprises means for sending the e-mail to the pre-registered e-mail address for that account holder.

30. An on-line system for purchase of goods or services by a customer from a merchant comprising:
at the merchant:
means for receiving an order from a customer including payment details from a debit or credit account;
means for requesting authorisation to fulfil the order from a third party honouring the debit or credit payment;
at the third party:
means for sending an electronic communication to the account holder on receipt on an authorisation request from the merchant, the electronic communication requesting verification of the debit or credit transaction;
means for receiving a reply to the electronic communication from the account holder;
means for refusing authorisation of the transaction if the reply received from the account holder does not accept the transaction; and
at the account holder:
means for receiving the electronic communication from the third party; and
means for sending an electronic response to the communication to the third party.

31. An on-line system according to claim 30, wherein the means, at the third party, for sending an electronic communication to the account holder includes means for including in that communication a unique transaction reference.

32. An on-line system according to claim 31, wherein the means, at the account holder, for sending an electronic response includes means for including the unique transaction reference in the response.

33. An on-line system according to claims 30, 31 or 32, comprising an intermediate party arranged between the account holder and the third party, the intermediate party including means for receiving electronic communications from each of the third party and the account holder and passing them on to the third party and account holder respectively.

34. An on-line system according to any of claims 30 to 33, wherein one of the third party and the intermediate party includes a store of pre-registered account holder electronic communication addresses and means for sending the electronic verification request comprises means for sending the verification request to the pre-registered account holder electronic communication address.

35. An on-line system according to any of claims 30 to 34, wherein the verification communication and the response thereto are e-mail communications, and one of the third party and the intermediate party includes means for sending and receiving e-mails and the account holder includes means for receiving and sending e-mails.

36. A method of authenticating transactions made on-line in which a pre-registered party has credit with an on-line merchant and goods or services are ordered from a customer browser and the order sent on-line to the merchant, and wherein the cost of the order is to be debited from the pre-registered party's credit with the merchant, the method comprising the steps of:
the merchant sending an electronic verification request to a pre-registered electronic communication address for the pre-registered party; and
the merchant refusing to complete the transaction if the transaction is not verified by the pre-registered party.

37. A system for authenticating payments made on-line by a customer to a merchant, the system comprising, at the merchant:
a store of pre-registered electronic communication addresses for pre-registered parties;
a store of credit held with the merchant by the pre-registered parties;
means for receiving from a customer browser an order for goods or services to be paid for by drawing down the credit of a pre-registered party, the order including an identification of the pre-registered party;
means for sending to the pre-registered party an electronic communication seeking verification of the transaction requested; and
at the pre-registered party:
means for receiving the verification request from the merchant and for indicating to the merchant whether or not the proposed transaction is accepted.

38. A system for authorising payment for goods or services ordered by a customer from a merchant in which the customer intends to pay for the goods or services by a credit or debit payment, the method comprising the steps of:
sending an electronic verification request to the party to whom the means of credit or debit payment is registered, the verification request requesting verification of the payment from the pre-registered owner of the payment means; and
refusing the transaction unless the pre-registered owner of the payment means accepts the transaction.

39. A method according to claim 38 wherein the electronic communication is an e-mail sent to a pre-registered e-mail address.

40. A method according to claim 39 wherein the e-mail is received at an Internet enabled mobile communications device.
